# FASCICULE DE BREVET EUROPEEN

(11) **EP 1 625 197 B1**
(45) Date de publication et mention de la délivrance du brevet: **26.09.2007**
(21) Numéro de dépôt: 04713567.8
(22) Date de dépôt: 23.02.2004
(51) Int. Cl.: C12G 1/00

(54) **DISPOSITIF POUR ASSECHER LE MARC DU VIN A L'INTERIEUR OU A L'EXTERIEUR DE LA CUVE DE VINIFICATION**
ANLAGE ZUR TROCKENLEGUNG DES TRAUBENTRESTERS INNERHABLB ODER AUSSERHALB EINES GÄRBEHÄLTERS
DEVICE FOR DRYING WINE MARC INSIDE OR OUTSIDE A WINEMAKING VAT

(30) Priorité: 25.02.2003 FR 0302256
(43) Date de publication de la demande: 15.02.2006
(73) Titulaire: Sciard, Alain, 33330 St. Emilion (FR); Sciard, Geoffroy, 33330 Saint-Emilion (FR); Peyret, Anne, 78110 Le Vesinet (FR); Sciard, Jerome, 33330 Saint-Emilion (FR); Sciard, Nicolas Simon Jean, 67400 Geispolsheim Gare (FR); Sciard, Thibaut, 33330 Saint-Emilion (FR)
(72) Inventeur: Sciard, Alain, 33330 St. Emilion (FR); Sciard, Geoffroy, 33330 Saint-Emilion (FR); Peyret, Anne, 78110 Le Vesinet (FR); Sciard, Jerome, 33330 Saint-Emilion (FR); Sciard, Nicolas Simon Jean, 67400 Geispolsheim Gare (FR); Sciard, Thibaut, 33330 Saint-Emilion (FR)
(86) Numéro de dépôt international: PCT/FR2004/000402
(87) Numéro de publication internationale: WO 2004/076606

(56) Documents cités:
- EP-A- 1 228 855
- DE-C- 611 739
- FR-A- 2 708 423
- FR-A- 2 767 530

## Description

La présente invention concerne un dispositif pour assécher le marc du vin en le soumettant, à l'intérieur d'une enceinte étanche, à la double action du vide intérieur et de la pression atmosphérique extérieure.

Le marc, résidu solide obtenu après écoulage du vin de goutte, constitue une éponge gorgée de vin, dont on extrait traditionnellement le vin de presse à l'aide de pressoirs mécaniques, hydrauliques pneumatiques et plus récemment, statiques à dépression.

Ces derniers sont à membrane, celle-ci constituant la paroi déformable d'une enceinte qui ne l'est pas. Cette membrane a l'inconvénient d'être fragile ; elle oblige à une conduite prudente.

EP 1228855 décrit un pressoir à dépression contenant une membrane qui recouvre le marc.

Le dispositif selon l'invention permet de remédier à cet inconvénient. Il comporte en effet selon une première caractéristique une cuve de grand diamètre et de faible hauteur, dans laquelle on entasse le marc en le répartissant en une couche de faible épaisseur, aussi uniforme que possible. Un couvercle mobile vient fermer la cuve ; en glissant à l'intérieur de la paroi cylindrique de la cuve, le couvercle assure l'étanchéité grâce à un joint prisonnier de son bord. Lorsque l'on fait le vide, à l'intérieur de la dite cuve, par un ajutage situé en partie basse sous une grille ; le couvercle poussé par la pression atmosphérique vient s'appuyer sur le marc, et le comprime.

Le marc se comporte comme une éponge dont les pores vont, en se rétrécissant, libérer le vin de presse.

Le couvercle, élément rigide et moteur agit sans déplacement notable des éléments solides composant le marc et sans risque d'écrasement des peaux et pépins. Le frottement du joint est réduit au minimum et le rendement mécanique est excellent avec l'avantage de ne faire appel qu'aux moyens de pompage normalement utilisés dans un cuvier ou un chai : de préférence une pompe à piston avec clapets « boule ».

Selon une deuxième caractéristique la cuve de grand diamètre et de faible hauteur peut constituer le fond des cuves de type garde vin utilisés couramment pour la vinification. Le chapeau flottant constituant la partie mobile du système de pressuration selon la première caractéristique.

Selon des modes particuliers de réalisation :
- le bord supérieur de la cuve est évasé pour faciliter le passage du joint du couvercle mobile en début de pressuration.
- le joint du couvercle est gonflable, à la manière des garde-vin ouverts.
- le joint gonflable est contenu par une ceinture souple pour éviter les pincements et faciliter le glissement du couvercle.
- des renforts haut et bas, faits à partir de profilés ouverts, contiennent des bandages pour faciliter le roulement sur la tranche.
- des entretoises soudées entre les renforts et la paroi de la cuve permettent la manipulation par tous moyens élévateurs.

Les dessins annexés illustrent l'invention :
La figure 1 représente en coupe, le dispositif en son ensemble avec joint torique de préférence.
La figure 2 représente en coupe, avec grossissement, le bord évasé de la cuve cylindrique au moment de la prise de contact et après prise d'étanchéité.
La figure 3 représente en coupe le bord d'une cuve cylindrique circulaire sans évasement avec un couvercle avec joint gonflable et ceinture intermédiaire.
La figure 4 représente en perspective et en coupe une partie de la ceinture et un mode de raccordement, bout à bout, sur elle-même.
La figure 5 représente, un bord de cuve avec renfort, bandage de roulement et système de préhension.
La figure 6 représente, une position préférentielle du renfort bas.

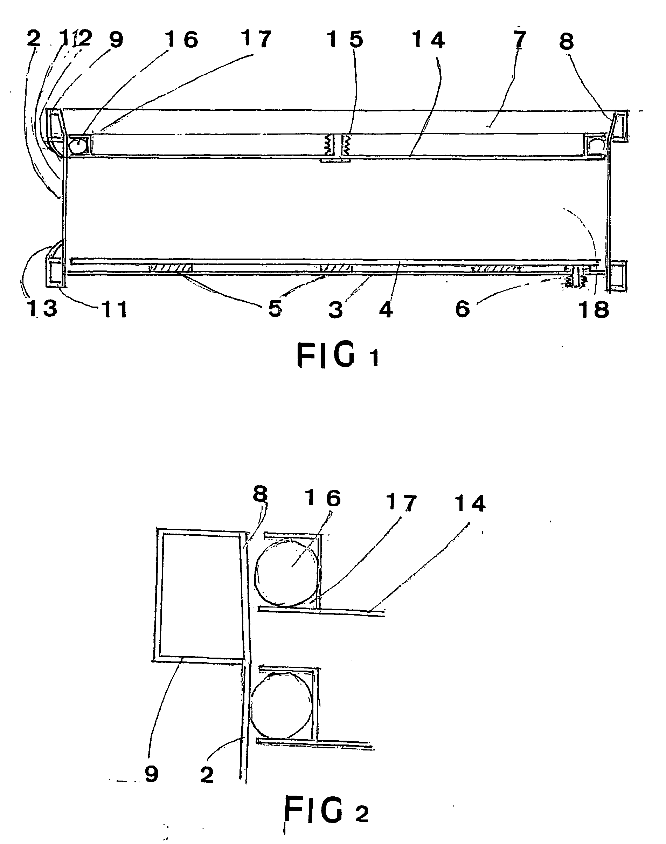

En référence à ces dessins, le dispositif selon les figures 1 et 2, 5 et 6, comporte une cuve (1), à paroi verticale(2) cylindrique uniformément lisse de section circulaire de préférence, de grand diamètre et de faible hauteur ; un fond (3) sur lequel est posé une grille (4)à fentes ou à trous, maintenue à une certaine distance du fond (3) par des supports (5). Un ajutage (6) permet d'évacuer le vin de presse rassemblé dans l'espace libre entre la grille (4) et le fond (3). Le bord supérieur (7) de la cuve est façonné pour lui donner un léger évasement (8)formant entonnoir. Un profilé en U vient renforcer le bord supérieur (7)à l'endroit de son évasement (8). Les bords libres du profilé (9) sont soudés sur la cuve (1) directement ou par l'intermédiaire d'une doublante (10) figure 5. De même un profilé bas (11) rigidifie le fond (3). Au moins deux étais par renfort, haut (12) et bas (13) permettent la saisie de la cuve (1) par des moyens de levage. Un couvercle circulaire (14), traversé par un ajutage (15) assure la fermeture de la cuve (1), grâce à un joint (16) torique de préférence, plein ou creux, logé dans une gorge (17). La dureté du joint et son diamètre permettent l'équilibre du couvercle en position haute à l'entrée dans l'évasement (8).

Lorsque l'on fait le vide à l'intérieur de la cuve (1), par l'ajutage inférieur (6), à l'aide d'une pompe à vin, à pistons et clapets « boule » de préférence, l'ajutage (15) étant fermé, le couvercle (14) amorce sa descente ; le joint (16) se déforme et l'étanchéité devient totale, (Figure 2). Le travail de compression et succion commence, le vin de presse étant évacué par l'ajutage (6) en même temps que l'air interstitiel compris dans le marc. Les irrégularités de surface du marc (18) s'effacent et le vin de presse s'écoule avec un débit accru dans une atmosphère de plus en plus voisine du vide, par conséquent sans contact avec l'air ambiant jusqu'à son arrivée dans le réservoir de recueil (non représenté). L'ajutage (15) situé sur le couvercle est utilisé pour l'évacuation de l'air résiduel, ou pour injecter un gaz neutre ou du vin de presse au début de la pressuration, ceci afin d'assurer un balayage des pores du marc avant leur fermeture. L'évacuation des oligo-éléments à l'état de micro particules en est facilitée. En fin d'opération, le marc (18) prend la consistance d'un mastic à faible teneur en liquide, d'ailleurs inutilisable du fait des risques de mauvais goûts en cas de rebêchage ou de compression forte par un autre moyen.

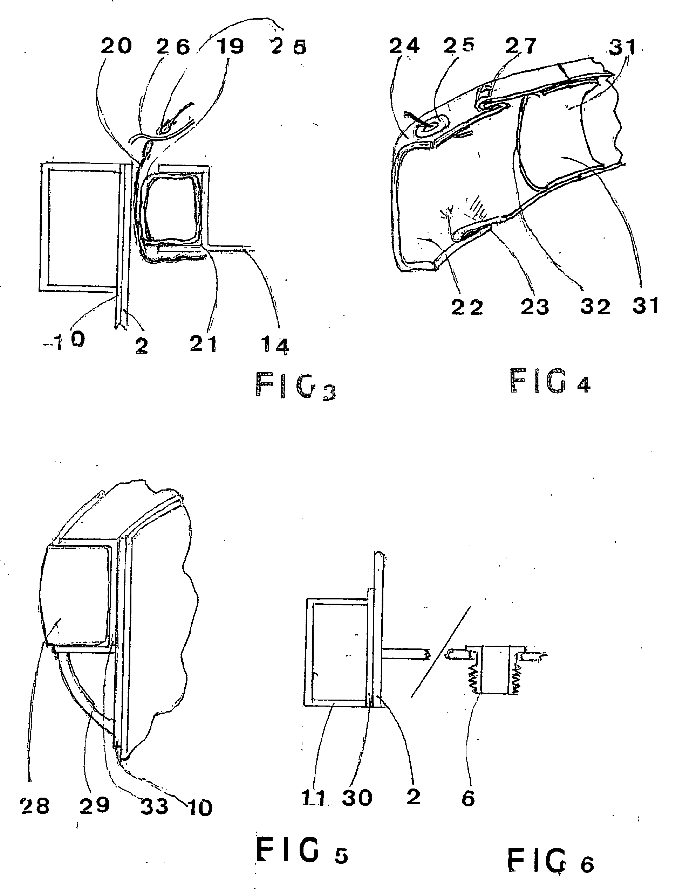

Dans la forme de réalisation selon les figures 3 et 4, la cuve est à parois cylindriques, sans évasement en partie haute. Un joint gonflable (19) assure l'étanchéité du couvercle (14). Pour éviter tout risque de pincement du dit joint pendant le mouvement de descente du couvercle une ceinture (20) souple, et étanche, représentée en coupe et en perspective, est intercalée entre le joint gonflable (19) et la paroi verticale (2). Cette ceinture en fine toile imperméable, par exemple du téflon, (qualité alimentaire), se déforme et se tend sous l'effet du gonflement du joint, pour assurer l'étanchéité paroi / couvercle en même temps que le glissement est favorisé par l'état des surfaces au contact. Pour éviter le déjantement et le pincement du joint (19), la ceinture (20) vient épouser la forme de la gorge (17) du couvercle (14) en sa partie basse (21)en interdisant tout mouvement vers le haut. Cet effet est obtenu par rétrécissement (22), par exemple par des plis (23), rivetés, cousus, soudés ou collés. Le bord supérieur (24) de la ceinture (20) est pourvu d'oeillets (25) distants par exemple de plusieurs dizaines de centimètres, réunis par un lacet (26), qui après réduction de sa longueur provoque un rétrécissement (27) du bord supérieur (24). Ceci permet d'assurer avant la descente du couvercle (14) la tenue en position haute de la dite ceinture (20).

Une autre forme de réalisation (non représentée) de la ceinture (20) consiste à adopter pour la partie basse de la ceinture le système de rétrécissement par oeillets (25) et lacet (26) comme exposé ci-dessus pour le bord haut (24) de la ceinture (20) ; l'effort de traction du couvercle étant important, il convient de renforcer les deux bords de la ceinture (20) par une double épaisseur de toile, par exemple par rabattement des bords avant la pose des oeillets (25). Pour éviter que des micro-particules ne soient piégées dans ce qui constitue des revers ouverts, on préfèrera les coudre, les souder ou les coller. Il n'y a plus de sens haut ou bas, la ceinture étant symétrique et réversible. Ceci à l'avantage de pouvoir donner à la toile des qualités physiques différentes pour chacune des faces, par exemple lisse d'un côté, rugueuse de l'autre, selon que l'on utilise ou non un lubrifiant liquide sous forme de gel ou de pâte, de qualité alimentaire telle que huile ou graisse végétale, animale ou synthétique. La fermeture de la ceinture sur elle-même se fait avec au moins un raccord, après découpe à la bonne longueur du ruban de toile. Ce raccord peut-être réalisé de deux façons par chevauchement des deux extrémités ou par assemblage bord à bord avec placage d'une pièce de toile (31) de jonction à l'intérieur, avec dans les deux cas, couture, soudure ou collage. La présence d'un ou deux changements de niveaux (32) oblige à un lissage de la surface à l'aide d'une pâte comme exposé précédemment. (Partie droite de la figure 4). Toutefois l'étanchéité intérieure, ceinture /joint gonflable, est plus facile à réaliser du fait de la structure souple du joint gonflable (19) qui efface les irrégularités de surface.

Dans les formes de réalisation représentées en la figure 1 et 5, apparaît en coupe et perspective les moyens, de roulage et de saisie de cette cuve circulaire, communs aux renforts supérieur et inférieur (9) et (11). Ceux ci sont formés de profilés en U ouverts et soudés à la cuve par le fond même du profilé (33). Un bandage (28) plein ou creux encastré dans le profilé facilite le roulement en douceur sur la tranche. Pour la saisie de la cuve, des étais (29) constitués par des tiges en quart de cercle, soudées aux renforts (9) et (11), d'une part et à la cuve d'autre part, permettent la saisie par crochet ou manille. Le passage de la position verticale à l'horizontale de la cuve (1)et vice versa en est facilité. Pour éviter le poinçonnement, des doublantes (10) et (30) renforcent la solidité de la fixation de l'étai sur la paroi (2) ; même disposition pour les renforts (11) et (12).

Sur la figure 6 la position des renforts inférieurs (11) montre l'intérêt du décalage du fond vers le bas pour la protection de l'ajutage (6), lors du roulage ou de la prise de position horizontale.

Dans des formes de réalisation (non représentées), la cuve (1) peut-être placée sur un chariot de hauteur réglable ou sur un échafaudage pour être au niveau des ouvertures des cuves de vinification.

Dans une autre forme de réalisation non représentée, la grille (4) peut être remplacée en position basse, pour filtrer le vin de presse, par un tapis de coco tressé en une ou plusieurs parties. En ce cas, le volume libre d'aspiration du vin est réduit au minimum. Ce même procédé pratiqué depuis toujours pour l'écoulement du vin de presse rend possible le fractionnement du marc (18) en son épaisseur et permet le pompage en partie haute en début de cycle. Pour mémoire, parmi les autres moyens utilisés et non représentés, des roseaux reliés entre eux par des liens métalliques ou plastiques, par exemple répartis en au moins deux couches perpendiculaires permettent d'obtenir l'effet de filtrage du vin de presse.

Dans une autre forme de réalisation (non représentée) le dispositif cuve (1), grille (4), couvercle (14) est incorporé à la cuve de vinification de type garde vin et constitue le réceptacle du marc après écoulement du vin, ceci sans transfert. Le couvercle (14), élément mobile est remplacé par le flotteur utilisé pour les gardes vin cylindriques et est muni de son joint gonflable (19) recouvert de la ceinture (20) avec rétrécissement (22) pour permettre le glissement sans frottement le long des parois.

### Index des figures

- (1) -: Cuve cylindrique
- (2) -: paroi verticale
- (3) -: fond
- (4) -: grille
- (5) -: support de grille
- (6) -: ajutage de fond
- (7) -: bord supérieur de la paroi
- (8) -: évasement du bord supérieur de la cuve
- (9) -: profilé en U haut
- (10) -: doublante
- (11) -: profilé en U bas
- (12) -: étai haut
- (13) -: étai bas
- (14) -: couvercle circulaire
- (15) -: ajutage (du couvercle)
- (16) -: joint de couvercle
- (17) -: gorge du couvercle
- (18) -: marc
- (19) -: joint gonflable
- (20) -: ceinture
- (21) -: rebord inférieur (de la gorge du couvercle)
- (22) -: rétrécissement (de la ceinture)
- (23) -: plis, froncement
- (24) -: partie supérieure de la ceinture
- (25) -: oeillets
- (26) -: lacets
- (27) -: rétrécissement du bord supérieur de la ceinture
- (28) -: bandage
- (29) -: étai
- (30) -: doublante en tôle
- (31) -: toile de raccordement
- (32) -: changement de niveau
- (33) -: fond du profilé

## Revendications

1. Dispositif pour extraire le vin du marc à l'intérieur ou à l'extérieur des cuves de vinification, **caractérisé en ce qu'**il comporte une cuve (1) de grand diamètre et de faible hauteur avec paroi (2) verticale cylindrique de section circulaire et fond (3), un couvercle (14) circulaire de diamètre inférieur à celui de la cuve (1), porteur sur son bord d'une gorge (17) contenant un joint (16), torique plein ou creux, déformable pour assurer l'étanchéité et le glissement dudit couvercle (14), le fond (3) de la cuve (1) étant porteur d'une grille (4) à fentes ou à trous avec supports (5), le bord supérieur (7) de la paroi (2) étant évasé en forme d'entonnoir (8), pour permettre l'introduction dudit couvercle (14), un ajutage (6) débouchant entre fond (3) et grille (4) assurant le pompage du vin provenant du marc (18), un autre ajutage (15) solidaire du couvercle (14) permettant les mouvements du liquide ou l'introduction de gaz par le haut.

2. Dispositif selon la revendication 1 **caractérisé en ce que** la paroi (2) verticale de la cuve (1) est cylindrique avec diamètre constant, le couvercle (14) étant pourvu d'une gorge (17) contenant un joint gonflable (19).

3. Dispositif selon la revendication 2 **caractérisé en ce que** une ceinture (20) en matériau souple ou élastique, étanche de qualité alimentaire est intercalée entre la gorge (17) pourvue de son joint gonflable (19)et la paroi de la cuve (2), les deux bords repliés pour former des revers (31) étant fermés par couture, soudure ou collage et pourvus d'oeillets (25) dans lesquels passe un lacet (26) de longueur réglable, la ceinture réalisée à partir d'une bande de toile continue étant fermée sur elle-même par chevauchement des extrémités ou par leur rapprochement bord à bord, puis doublage dans ce dernier cas par une pièce de toile (31) qui en assure la fermeture, après couture, soudure ou collage, la différence de niveau (32) étant lissée par un produit de préférence pâteux.

4. Dispositif selon la revendication 3 **caractérisé en ce que** la partie inférieure (21) de la ceinture (20) possède une diminution de diamètre permanente (22) obtenue par froncements ou plis (23), ceux ci étant rendus indéformables par rivetage, soudure, couture, ou collage.

5. Dispositif selon la revendication 3 **caractérisé en ce que** la ceinture est symétrique et réversible, l'une des faces de la ceinture étant lisse, l'autre rugueuse pour faciliter la tenue d'un produit lubrifiant de qualité alimentaire tel que huile, graisse ou gel, ces produits étant d'origine végétale, animale ou de synthèse.

6. Dispositif selon les revendications 1 et 2 **caractérisé en ce que** le bord supérieur (7) et le bord du fond (3) sont rendus solidaires par soudage de profilés de section en U, haut (9) et bas (11), pour constituer avec la paroi des tubes formant renforts.

7. Dispositif selon la revendication 6 **caractérisé en ce que** les profilés haut (9) et bas (11) sont soudés sur la paroi (2) par le fond (33) de la section du profilé en U constituant ainsi une gorge ouverte (34) dans laquelle vient se loger un bandage (28) plein ou creux.

8. Dispositif selon les revendications 6 et 7 **caractérisé en ce que** les profilés sont soudés sur une tôle doublante (10) ou (30), elle-même soudée sur les parties supérieure et inférieure de la paroi (2) verticale.

9. Dispositif selon les revendications 6,7 et 8 **caractérisé en ce que** des étais haut (12) et bas (13) soudés entre les profilés (9) et (11) et la paroi (2) permettent la saisie de la cuve (1) par des moyens de manutention.

10. Dispositif selon les revendications 6, 7, et 8 **caractérisé en ce que** le profilé bas (11) est décalé pour positionner le fond (3) en surélévation afin d'assurer la protection de l'ajutage (6) pendant le roulage et la mise en oeuvre du système.

11. Dispositif selon les revendications 1, 2, 3, 4, 5 et 6 **caractérisé en ce que** le bas de la cuve de vinification de type garde vin cylindrique à flotteur est rigidifié par une doublante (30), un profilé (11) ou plus simplement les circuits d'eau de contrôle de la température à condition qu'ils soient placés près du fond, à l'extérieur à une hauteur voisine du dessus de la grille (4),
le flotteur, pourvu des équipements prévus pour le couvercle (14)en particulier joint (16) ou gonflable (19) avec ceinture (20) ajutage (15), agitant comme le ferait le couvercle (14), objet des revendications énumérées ci-dessus.

## Claims

1. Device for extracting the wine from the residue on the inside or the outside of winemaking vats, **characterised in that** it comprises a large-diameter, low-height vat (1) with a cylindrical vertical wall (2) of circular cross section and a bottom (3), a circular cover (14) having a diameter smaller than that of the vat (1), bearing a groove (17) on its edge, which contains a deformable, solid or hollow O-ring (16) for ensuring the sealing and sliding of said cover (14), the bottom (3) of the vat (1) bearing a grid (4) with slots or holes with supports (5), the upper edge (7) of the wall (2) being flared in the shape of a funnel (8) in order to enable insertion of the cover (14), a nozzle (6) opening out between the bottom (3) and the grid (4), ensuring pumping of the wine coming from the residue (18), another nozzle (15) integral with the cover (14), enabling the movement of the liquid or the introduction of gas through the top.

2. Device according to claim 1, **characterised in that** the vertical wall (2) of the vat (1) is cylindrical with a constant diameter, the cover (14) being provided with a groove (17) containing an inflatable seal (19).

3. Device according to claim 2, **characterised in that** a belt (20) made of a leak-proof, food-grade, flexible or elastic material is sandwiched between the groove (17) provided with its inflatable seal (19) and the wall of the vat (2), both edges being folded over in order to form inside facings (31) closed via sewing, seam bonding or gluing and provided with grommets (25) into which an adjustable-length lace (26) passes, the belt made from a continuous strip of fabric being folded over itself by overlapping the ends or by bringing them together edge-to-edge, then, in this latter case, by lining with a piece of fabric (31) which ensures the closure thereof, after sewing, seam bonding or gluing, the difference in level (32) being smoothed out with a preferably pasty product.

4. Device according to claim 3, **characterised in that** the lower portion (21) of the belt (20) has a permanent shrinkage in diameter (22) obtained by wrinkles or folds (23), these being rendered unstretchable via riveting, welding, sewing or gluing.

5. Device according to claim 3, **characterised in that** the belt is symmetrical and reversible, one of the faces of the belt being smooth, the other rough, in order to facilitate retention of a food-grade lubricant such as an oil, a grease or a gel, these products being of vegetable, animal or synthetic origin.

6. Device according to claims 1 and 2, **characterised in that** the upper edge (7) and the bottom edge (3) are made integral by welding top (9) and bottom (11) channel sections, in order to form reinforcement-forming tubes together with the wall.

7. Device according to claim 6, **characterised in that** the top (9) and bottom (11) sections are welded onto the wall (2) via the bottom (33) of the channel section, thereby forming an open groove (34) in which a solid or hollow tyre fits.

8. Device according to claims 6 and 7, **characterised in that** the sections are welded onto a doubling plate (10) or (30), itself welded onto the upper and lower portions of the vertical wall (2).

9. Device according to claims 6, 7 and 8, **characterised in that** top (12) and bottom (13) stays are welded between the sections (9) and (11) and the wall (2), thereby enabling the vat (1) to be grasped by handling means.

10. Device according to claims 6, 7 and 8, **characterised in that** the bottom section (11) is offset in order to position the bottom (3) at a higher level so as to ensure protection of the nozzle (6) when rolling and implementing the system.

11. Device according to claims 1, 2, 3, 4, 5 and 6, **characterised in that** the bottom of the float-type cylindrical wine-keeper winemaking vat is made rigid by a doubling plate (30), a section (11) or more simply the temperature-controlling water systems, provided that they are placed near the bottom, on the exterior, at a height close to the top of the grid (4), the float, provided with the equipment intended for the cover (14), in particular the O-ring seal (16) or inflatable seal (19) with the belt (20) and nozzle (15), acting as would the cover (14) that is the subject of the numbered claims above.

## Patentansprüche

1. Vorrichtung zum Extrahieren des Weins aus dem Trester innerhalb oder außerhalb der Vinifikationstanks, **dadurch gekennzeichnet, dass** sie einen Tank (1) von großem Durchmesser und geringer Höhe mit einer vertikalen, zylindrischen Wand (2) mit kreisförmigem Querschnitt und einem Boden (3), einen kreisförmigen Deckel (14) mit einem Durchmesser, der geringer ist als jener des Tanks (1), umfasst, wobei dieser Deckel an seinem Rand eine Nut (17) aufweist, die eine Dichtung (16), einen hohlen oder vollen O-Ring, enthält, der verformbar ist, um die Dichtheit und das Gleiten des besagten Deckels (14) zu gewährleisten, wobei der Boden (3) des Tanks (1) einen geschlitzten oder gelochten Rost (4) mit Trägern (5) aufweist, wobei der obere Rand (7) der Wand (2) trichterförmig (8) erweitert ist, um das Einsetzen des besagten Deckels (14) zu ermöglichen, eine Durchflussdüse (6), die zwischen dem Boden (3) und dem Rost (4) einmündet und das Abpumpen des Weins aus dem Trester (18) gewährleistet, und eine weitere Durchflussdüse (15) umfasst, die mit dem Deckel (14) verbunden ist und die Bewegungen der Flüssigkeit oder den Gaseinlass von oben ermöglicht.

2. Vorrichtung nach Anspruch 1, **dadurch gekennzeichnet, dass** die vertikale Wand (2) des Tanks (1) zylindrisch mit konstantem Durchmesser ist, wobei der Deckel (14) mit einer Nut (17) versehen ist, die eine aufblasbare Dichtung (19) enthält.

3. Vorrichtung nach Anspruch 2, **dadurch gekennzeichnet, dass** ein Gurt (20) aus einem weichen oder biegsamen, dichten und lebensmittelechten Material zwischen der Nut (17), die mit ihrer aufblasbaren Dichtung (19) versehen ist, und der Tankwand (2) eingeschoben ist, wobei die beiden Ränder, die umgebogen sind, um Stulpen (31) zu bilden, durch Zusammennähen, Verschweißen oder Verkleben geschlossen werden und mit Ösen (25) versehen sind, in denen ein Band (26) mit verstellbarer Länge durchläuft, wobei der Gurt, der aus einem durchgehenden Leinenband hergestellt ist, geschlossen wird, indem die Enden überlappen oder diese Rand an Rand zusammengesetzt werden, und dann in diesem letzten Fall mit einem Leinenstück (31) ausgefüttert werden, das nach dem Zusammennähen, Verschweißen oder Verkleben den Verschluss gewährleistet, wobei der Höhenunterschied (32) von einem vorzugsweise pastenartigen Produkt geglättet wird.

4. Vorrichtung nach Anspruch 3, **dadurch gekennzeichnet, dass** der untere Teil (21) des Gurts (20) eine permanente Durchmesserverringerung (22) besitzt, die durch Kniffe oder Falten (23) erhalten wird, wobei Letztere durch Vernieten, Verschweißen, Zusammennähen oder Verkleben formbeständig gemacht werden.

5. Vorrichtung nach Anspruch 3, **dadurch gekennzeichnet, dass** der Gurt symmetrisch und umkehrbar ist, wobei eine der Gurtseiten glatt und die andere rau ist, um den Halt eines lebensmittelechten Schmiermittels, wie etwa Öl, Fett oder Gel, zu ermöglichen, wobei diese Mittel pflanzlichen, tierischen oder synthetischen Ursprungs sind.

6. Vorrichtung nach den Ansprüchen 1 und 2, **dadurch gekennzeichnet, dass** der obere Rand (7) und der Rand des Bodens (3) mit U-förmigen Profilen oben (9) und unten (11) durch Verschweißen verbunden werden, um mit der Wand Rohre zu schaffen, die eine Verstärkung bilden.

7. Vorrichtung nach Anspruch 6, **dadurch gekennzeichnet, dass** die oberen (9) und unteren (11) Profile mit dem Boden (33) des U-förmigen Profils an die Wand (2) geschweißt werden, wodurch eine offene Nut (34) geschaffen wird, in der eine Hohl- oder Vollbereifung (28) untergebracht ist.

8. Vorrichtung nach den Ansprüchen 6 und 7, **dadurch gekennzeichnet, dass** die Profile auf ein Einlageblech (10) oder (30) geschweißt werden, das seinerseits auf dem oberen Teil und dem unteren Teil der vertikalen Wand (2) geschweißt ist.

9. Vorrichtung nach den Ansprüchen 6, 7 und 8, **dadurch gekennzeichnet, dass** zwischen den Profilen (9) und (11) und der Wand (2) obere (12) und untere (13) Streben angeschweißt sind, die das Ergreifen des Tanks (1) mit Beförderungsmitteln ermöglichen.

10. Vorrichtung nach den Ansprüchen 6, 7 und 8, **dadurch gekennzeichnet, dass** das untere Profil (11) versetzt ist, um den Boden (3) erhöht zu positionieren, damit der Schutz der Durchlassdüse (6) während des Walzens und des Einsatzes des Systems gewährleistet wird.

11. Vorrichtung nach den Ansprüchen 1, 2, 3, 4, 5 und 6, **dadurch gekennzeichnet, dass** der untere Teil des Vinifikationstanks, der von der Art zylindrischer Weintank mit Schwimmer ist, durch ein Einlageblech (30), ein Profil (11) oder viel einfacher durch die Wasserkreisläufe zur Temperaturkontrolle versteift ist, vorausgesetzt sie sind nahe dem Boden, außerhalb auf einer Höhe in der Nähe der Oberseite des Rosts (4) angeordnet, wobei der Schwimmer, der mit den Ausrüstungen, insbesondere mit einer Dichtung (16) oder aufblasbarer Dichtung (19) mit Gurt (20) und Durchlassdüse (15), ausgestattet ist, die für den Deckel (14) vorgesehen sind, so wirkt, wie es der Deckel (14) tun würde, der Gegenstand der oben aufgezählten Patentansprüche ist.
